(19) Europäisches Patentamt
European Patent Office
Office européen des brevets

(11) **EP 4 123 486 A1**

(12) **EUROPEAN PATENT APPLICATION**

(43) Date of publication:
**25.01.2023 Bulletin 2023/04**

(21) Application number: **21200624.1**

(22) Date of filing: **04.10.2021**

(51) International Patent Classification (IPC):
**G06F 21/55** $^{(2013.01)}$      **G06F 21/62** $^{(2013.01)}$

(52) Cooperative Patent Classification (CPC):
**G06F 21/6227; G06F 21/554; G06F 21/6245**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.07.2021 PCT/CN2021/107283**

(71) Applicant: **Koninklijke Philips N.V.
5656 AG Eindhoven (NL)**

(72) Inventor: **LARMUSEAU, Adriaan Joris H
Eindhoven (NL)**

(74) Representative: **Philips Intellectual Property & Standards
High Tech Campus 52
5656 AG Eindhoven (NL)**

(54) **SYSTEMS AND METHODS FOR IMPROVED RESEARCHER PRIVACY IN DISTRIBUTED LEDGER-BASED QUERY LOGGING SYSTEMS**

(57)    A method (100) for logging queries made to a data system (200), comprising: receiving (120), at the data system, an encrypted query from an authorized query entity, wherein the encrypted query is digitally signed by the query entity using a digital signature method, and further wherein the digital signature is encrypted using a cryptographic authentication method; and logging (130), at a query logging database of the data system, at least a portion of the encrypted query.

FIG. 1

EP 4 123 486 A1

## Description

FIELD OF THE INVENTION

The present disclosure is directed generally to methods and systems for protecting researcher privacy when making and logging queries with a ledger-based query logging system.

BACKGROUND OF THE INVENTION

Many data systems comprise data that is distributed across multiple stakeholders, such as a distributed cohort. The data system may comprise numerous databases each containing some of the data of the system. A query interface of the data system enables an authorized researcher to interrogate the distributed data, in order to identify and/or retrieve data relevant to the researcher's query.

However, a malicious researcher or someone that has illicitly obtained an authorized researcher's credentials can perpetrate inference attacks, such as re-identification attacks, on the data system using a set of well-designed queries. It is therefore crucial to log queries received by the data system in case an attack is suspected and an inquiry must be carried out. One way to log queries is using blockchain, which enables different stakeholders to keep track of transactions (e.g., queries) and store them in an immutable distributed ledger, optionally with a full copy of the ledger at each of the stakeholders. As such, a blockchain is an appealing solution.

Logging queries at the data system, however, creates at least one privacy issue, namely identification of the researcher or other authorized query entity making the query. Typically, all participants in the data system - other than the researcher or other authorized query entity - have full access to and visibility of all data in the system. Thus, these participants can read all logged data in the ledger, thereby potentially able to leak substantial information about the identity, concerns, and/or intents of the researchers or other authorized query entities. Although limiting access to the ledger to authorized users, such as via permissioned blockchain, is one option, this approach relies on entirely on trust in the permissioned users. Existing security solutions for distributed logging have focused on ensuring aspects such as authenticity and secure storage. However, these solutions are not sufficient as they do not address the concern that the queries and identities of the researcher or other authorized query entity making the query remain private in the data system.

SUMMARY OF THE INVENTION

There is a continued need for secure data systems and methods that provide authentication of authorized querying entities without revealing the identity of the authorized querying entity. The present disclosure is directed to inventive methods and systems for receiving, authenticating, and logging encrypted queries using a query system. Various embodiments and implementations herein are directed to a data system comprising distributed data and a query ledger. The data system receives an encrypted query from an authorized query entity, wherein the encrypted query is digitally signed by the query entity using a Camenisch-Lysyanskaya signature (CLS) digital signature method, and further wherein the digital signature is encrypted using a cryptographic authentication method. The data system logs at least a portion of the encrypted query in a query logging database - a ledger or log - of the data system. According to an embodiment, the data system can review one or more received queries for a potential security violation, and/or the system can verify that the query entity is an authorized query entity using de-identification via the cryptographic authentication method and the CLS digital signature method, wherein verification does not reveal the identity of the query entity. According to an embodiment, the data system can modify the received encrypted query to remove identifying information, thereby generating a modified encrypted query, and can log the modified encrypted query in the query logging database. According to an embodiment, an enforcer of the query system can access one or more logged queries in the query logging database, and can de-identify the accessed logged queries using the cryptographic authentication method and the CLS digital signature method, where verification reveals the identity of the accessed logged queries for security review or other purposes. According to an embodiment, the data system is a distributed genomic data system, although many other systems are possible.

Generally, in one aspect, a method for logging queries made to a data system is provided. The method includes: (i) receiving, at the data system, an encrypted query from an authorized query entity, wherein the encrypted query is digitally signed by the query entity using a digital signature method, and further wherein the digital signature is encrypted using a cryptographic authentication method; and (ii) logging, at a query logging database of the data system, at least a portion of the encrypted query.

According to an embodiment, the digital signature method is the Camenisch-Lysyanskaya signature (CLS) digital signature method.

According to an embodiment, the cryptographic authentication method is a zero-knowledge Succinct Non-interactive ARguments of Knowledge (zk-SNARK) method or a zero-knowledge Scalable Transparent ARguments of Knowledge (zk-STARK) method.

According to an embodiment, the query further comprises: (i) a public key for the digital signature; and (ii) a public key for the cryptographic authentication. According to an embodiment, the query further comprises: (iii) an encrypted unique identifier for the authorized query entity; and (iv) an encrypted timestamp for the query.

According to an embodiment, the method further includes verifying, by the data system, that the query entity is an authorized query entity, wherein verifying comprises analysis of the encrypted digital signature using de-identification via the cryptographic authentication method and the digital signature method, wherein verification does not reveal the identity of the query entity.

According to an embodiment, the method further includes modifying, by the data system, the received encrypted query to remove identifying information, thereby generating a modified encrypted query, wherein at least a portion of the modified encrypted query is logged in the query logging database of the data system.

According to an embodiment, the method further includes: accessing, by an enforcer of the query system, one or more logged queries logged in the query logging database of the data system; and identifying, by the enforcer, the one or more logged queries using the cryptographic authentication method and the digital signature method, and wherein verification reveals the identity of each of the one or more logged queries.

According to an embodiment, the data system is a distributed genomic data system.

According to another aspect is a distributed database system for logging queries made to the system. The system includes: a query logging database configured to store at least a portion of a query made by an authorized query entity to the distributed database system; a plurality of distributed databases; and a processor configured to: (i) receive an encrypted query from the authorized query entity, wherein the encrypted query is digitally signed by the query entity using a digital signature method, and further wherein the digital signature is encrypted using a cryptographic authentication method; and (ii) cause the received encrypted query to be stored in the query logging database.

In various implementations, a processor or controller may be associated with one or more storage media (generically referred to herein as "memory," e.g., volatile and non-volatile computer memory such as RAM, PROM, EPROM, and EEPROM, floppy disks, compact disks, optical disks, magnetic tape, etc.). In some implementations, the storage media may be encoded with one or more programs that, when executed on one or more processors and/or controllers, perform at least some of the functions discussed herein. Various storage media may be fixed within a processor or controller or may be transportable, such that the one or more programs stored thereon can be loaded into a processor or controller so as to implement various aspects as discussed herein. The terms "program" or "computer program" are used herein in a generic sense to refer to any type of computer code (e.g., software or microcode) that can be employed to program one or more processors or controllers.

It should be appreciated that all combinations of the foregoing concepts and additional concepts discussed in greater detail below (provided such concepts are not mutually inconsistent) are contemplated as being part of the inventive subject matter disclosed herein. In particular, all combinations of claimed subject matter appearing at the end of this disclosure are contemplated as being part of the inventive subject matter disclosed herein. It should also be appreciated that terminology explicitly employed herein that also may appear in any disclosure incorporated by reference should be accorded a meaning most consistent with the particular concepts disclosed herein.

These and other aspects of the various embodiments will be apparent from and elucidated with reference to the embodiment(s) described hereinafter.

BRIEF DESCRIPTION OF THE DRAWINGS

In the drawings, like reference characters generally refer to the same parts throughout the different views. Also, the drawings are not necessarily to scale, emphasis instead generally being placed upon illustrating the principles of the various embodiments.

Fig. 1 is a flowchart of a method for logging queries made to a data system, in accordance with an embodiment.
Fig. 2 is a schematic representation of a data system, in accordance with an embodiment.
Fig. 3 is a schematic representation of a data system, in accordance with an embodiment.
Fig. 4 is a schematic representation of a data system, in accordance with an embodiment.
Fig. 5 is a schematic representation of a data system, in accordance with an embodiment.
Fig. 6 is a schematic representation of a data system, in accordance with an embodiment.

DETAILED DESCRIPTION OF EMBODIMENTS

The present disclosure describes various embodiments of a system and method for making and logging queries with a ledger-based query logging system. Applicant has recognized and appreciated that it would be beneficial to provide a method and system that protects the privacy of an authorized querying entity when the entity uses the ledger-based query logging system. A data system receives an encrypted query from an authorized query entity, wherein the encrypted query is digitally signed by the query entity using a Camenisch-Lysyanskaya signature (CLS) digital signature method, and further wherein the digital signature is encrypted using a cryptographic authentication method. The data system logs at least a portion of the encrypted query in a query logging database - a ledger or log - of the data system. According to an embodiment, the data system can review one or more received queries for a potential security violation, and/or the system can verify that the query entity is an authorized query entity using de-identification via the cryptographic authentication method and the CLS digital signature method, wherein verification does not reveal the identity of the query entity. According to an embodiment, the data system can modify the received encrypted query to remove identifying information, thereby generating a modified encrypted query, and can log the modified encrypted query in the query logging database. According to an embodiment, an enforcer of the query system can access one or more logged queries in the query logging database, and can de-identify the accessed logged queries using the cryptographic authentication method and the CLS digital signature method, where verification reveals the identity of the accessed logged queries for security review or other purposes. According to an embodiment, the data system is a distributed genomic data system, although many other systems are possible.

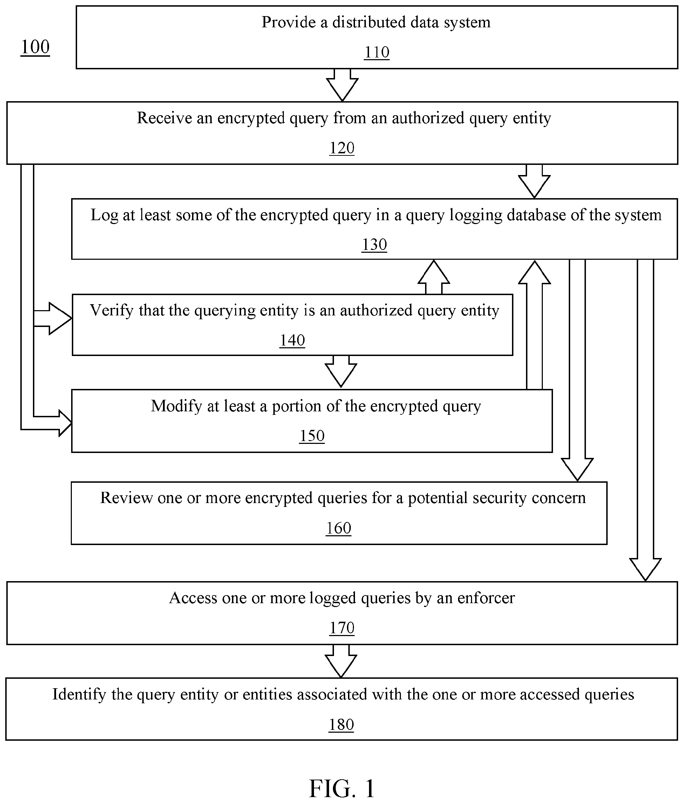

Referring to Fig. 1, in one embodiment, is a flowchart of a method 100 for logging queries to a distributed data system. The methods described in connection with the figures are provided as examples only, and shall be understood not limit the scope of the disclosure. The distributed data system can be any of the systems described or otherwise envisioned herein. The distributed data system can be a single system or multiple different systems.

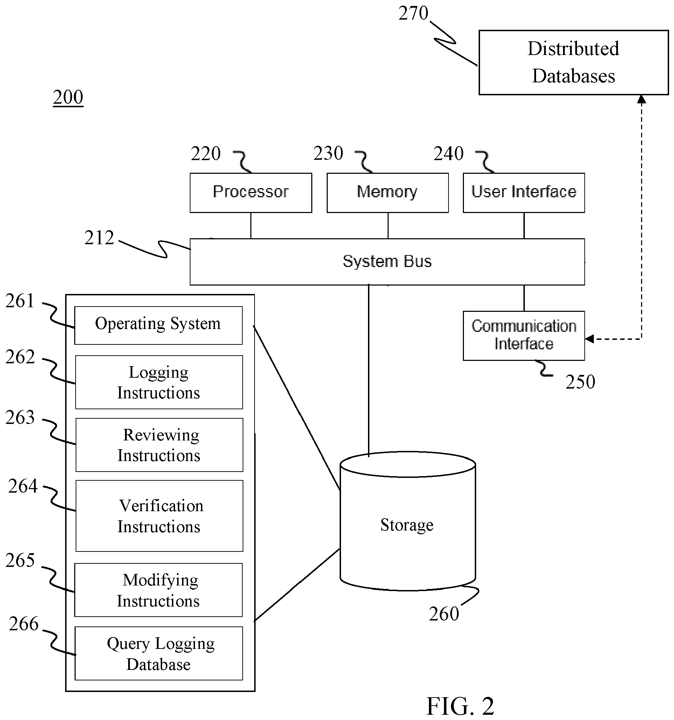

At step 110 of the method, a distributed data system is provided. Referring to an embodiment of a distributed data system 200 as depicted in Fig. 2, for example, the system comprises one or more of a processor 220, memory 230, user interface 240, communications interface 250, and storage 260, interconnected via one or more system buses 212. It will be understood that Fig. 2 constitutes, in some respects, an abstraction and that the actual organization of the components of system 200 may be different and more complex than illustrated. Additionally, distributed data system 200 can be any of the systems described or otherwise envisioned herein. Other elements and components of distributed data system 200 are disclosed and/or envisioned elsewhere herein.

According to an embodiment, the distributed data system comprises data distributed across multiple databases. Authorized users, querying entities, can query the distributed data system to identify and/or retrieve data from one or more of the multiple databases. According to an embodiment the distributed data system is a distributed genomic data system and the query is a query for genomic data, although many other systems are possible.

At step 120 of the method, the distributed data system receives a query from an authorized user. To protect the identity and privacy of the authorized user, the query is digitally signed and encrypted. According to an embodiment, the encrypted query is digitally signed by the query entity using a Camenisch-Lysyanskaya signature (CLS) digital signature method, although other digital signature methods are possible. According to an embodiment, the encrypted query is encrypted using a cryptographic authentication method.

According to an embodiment, the Camenisch-Lysyanskaya signature (CLS) digital signature method is leveraged for secure digital signature. The CLS method is described, for example, in "Signature schemes and anonymous credentials from bilinear maps," Camenisch and Lysyanskaya, Advances in Cryptology Vol. 3152:56-72 (Springer Verlag, 2004). According to an embodiment, the cryptographic authentication method is a zero-knowledge Succinct Non-interactive Arguments of Knowledge (zk-SNARK) method, which is a cryptographic proof technique for establishing knowledge or ownership in a manner that preserves confidentiality while minimizing the amount of bandwidth used for communication. With zk-SNARKs, parties that have access to a proving key can produces cryptographic proofs that parties owning the verifying key can verify. As an alternative, a zero-knowledge Scalable Transparent ARguments of Knowledge (zk-STARK) method can similarly be utilized.

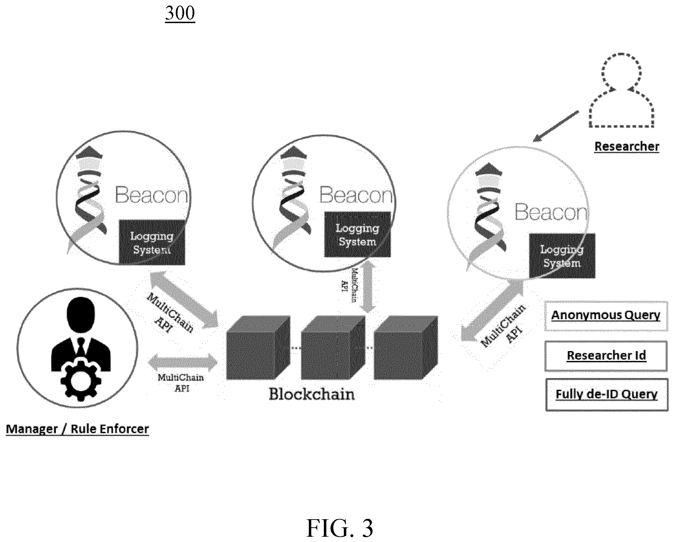

According to an embodiment, the method anonymizes both research identities and logged queries, thereby limiting each participant in the system to the minimum amount of information they need access to enable the functioning of the system. Referring to Fig. 3, in one embodiment, is a schematic representation of a data system 300. In this example, the system is a genomic data system, although many other data systems are possible. In this system, genomic databases (beacons) receive anonymous queries. The beacons know the contents of the query, and they know it was sent by a researcher that has the permission to do so, but they do not know which researcher of all possibly permissioned researchers it is that sent the query. In this system, the other databases connected to the logging system see only the fully de-identified query, as the anonymous query is further stripped of any possible personally-identifiable information in the query itself before it is stored in the database. In this system, the rule enforcer is the one and only party able to uncover the identity of the researcher to be able to ban or punish researchers that break any rules.

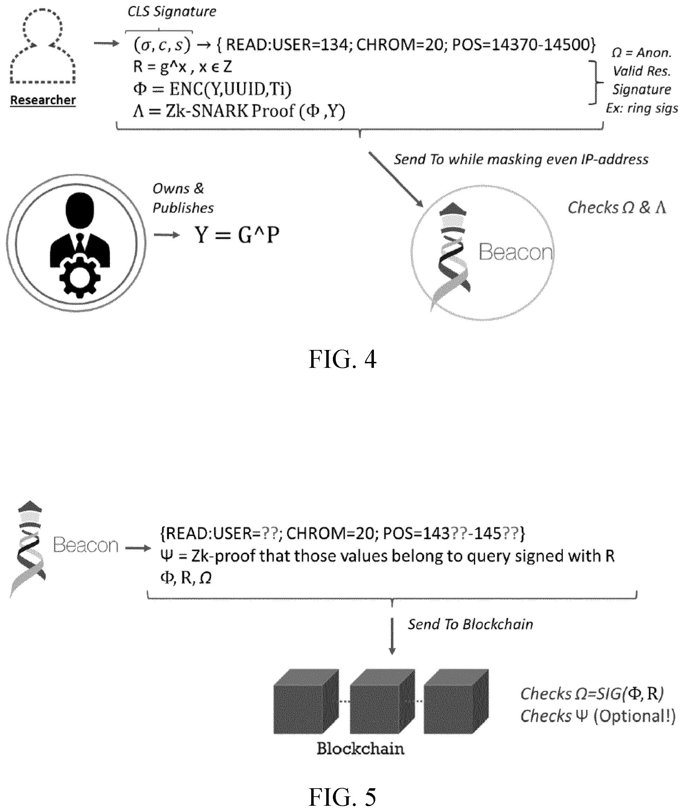

Referring to Fig. 4, in one embodiment, is a schematic of an encrypted query to a beacon of the distributed data system from an authorized user of the system. To protect the identity and privacy of the authorized user, the query is digitally signed and encrypted. According to an embodiment, the encrypted query is digitally signed by the query entity using the CLS digital signature method, although other digital signature methods are possible. According to an embodiment, the encrypted query is encrypted using a cryptographic authentication method.

According to an embodiment, the data system enables the following: (i) the authorized researcher/entity signs the query using the CLS signature method for a private key x, with the corresponding public key R included with the query, and the researcher/entity encrypts their unique id (UUID) and a timestamp (Ti) with Y, which is the public key of the rule enforcing party. Also, the data system enables the following: (ii) the authorized researcher/entity includes a zk-SNARK (or zk-STARK) proof that the encryption is a correct encryption, and the authorized researcher/entity signs at minimum the public key R and the encryption with an anonymizing signature scheme such as a ring signature.

This digital signature and encryption process enables the researcher/entity to hide their identity. The method also allows the data system that processed that query to de-identify, in an integrity preserving manner, some parts of that query. For example, the data system may believe or understand or suspect that the query is possibly exposing through inference sensitive information of the data. Notably, the data system is not primarily concerned about what can be revealed by a single query - as note the responses are not logged - but is primarily concerned with sequences of queries, as certain patterns may reveal to a knowledgeable reader various personally-identifiable information the database. Indeed, continuation implies positive responses to prior requests.

At step 130 of the method, some or all of the encrypted query is logged in a ledger such as a query logging database of the distributed data system. The encrypted query can be stored in the query logging database using any method for storing encrypted data. Logging query data enables the future retrieval of query data, such as identification of a querying entity, in the event of a potential or known security or privacy issue. However, since the query is still encrypted, only an enforcer of the distributed data system can access and utilize encrypted query data after it is decrypted. An enforcer can be, for example, an entity responsible for ensuring security and/or privacy of the distributed data system and/or the query logging database of the system. For example, an enforcer may need to access and utilize decrypted query data if there is a concern or suspicion that a malicious authorized user or someone that has illicitly obtained an authorized user's credentials has accessed the distributed data system, potentially for unauthorized purposes.

At optional step 140, the distributed data system verifies that the querying entity is an authorized user of the distributed data system, without revealing the identity of the querying entity. According to an embodiment, verifying comprises analysis of the encrypted digital signature using de-identification via the cryptographic authentication method and the digital signature method.

Referring to Fig. 5, in one embodiment, is a schematic of the partial identification or authentication of a received query, where the identification or authentication is done in a manner that authorizes but does not reveal protected personally-identifiable information of the querying entity or entities. For example, the system enables that the query is an accurate representation of the original query sent by the researcher. To do this, the system utilizes the public key R and the CLS signature provided by the researcher when sending the query. Given those two elements, the system can produce a reverse CLS zk-proof that proves that the lesser detailed object - the query to be verified - is an accurate subset of the original object, that is, the original query, without disclosing the original object.

According to an embodiment, before or after the distributed data system verifies that the querying entity is an authorized user of the system, the query can be logged in the query logging database of the distributed data system at step 130 of the method.

At optional step 150 of the method, the distributed data system modifies the received encrypted query to remove identifying information, thereby generating a modified encrypted query. According to an embodiment, after the distributed data system modifies the encrypted query and creates the modified encrypted query, the modified encrypted query can be logged in the query logging database of the distributed data system at step 130 of the method.

At optional step 160 of the method, the distributed data system or a user of the distributed data system reviews one or more encrypted queries, such as one or more logged encrypted queries, for a potential security violation. This analysis or review can be performed without decrypting the query, and without knowing the identity of the querying entity that made each of the one or more encrypted queries. For example, a user or an algorithm can review encrypted queries to identify a pattern or other flag or identifier that may indicate a potential privacy or security concern or violation. The pattern or other flag or identifier may indicate that a malicious authorized user or someone that has illicitly obtained an authorized user's credentials has accessed the distributed data system, potentially for unauthorized purposes. If a pattern or other flag or identifier is found, the user or distributed data system can alert an enforcer or other entity responsible for ensuring security and/or privacy of the distributed data system and/or the query logging database of the system.

At step 170 of the method, an enforcer of the distributed data system accesses one or more queries logged in the query logging database of the system. According to an embodiment, the enforcer is any entity responsible for ensuring security and/or privacy of the distributed data system and/or the query logging database of the system. The system will have a limited number of enforcers, with extensive security and/or other authorization protocols, to ensure limited and secure access to the query logging database of the system. Only an enforcer of the distributed data system can access and utilize encrypted query data. An enforcer may need to access and utilize decrypted query data if there is a concern or suspicion that a malicious authorized user or someone that has illicitly obtained an authorized user's credentials has accessed the distributed data system, potentially for unauthorized purposes. According to an embodiment, the enforcer may need to access and utilize encrypted query data once a pattern or other flag or identifier has been identified indicating a potential privacy or security concern or violation. The pattern or other flag or identifier may indicate that a malicious authorized user or someone that has illicitly obtained an authorized user's credentials has accessed the distributed data system, potentially for unauthorized purposes. The enforcer can access the data locally or remotely.

At step 180 of the method, the enforcer identifies the query entity or entities associated with the accessed one or more logged queries using the cryptographic authentication method and the digital signature method. The identification, of course, reveals the entity or entities that made each of the one or more logged queries.

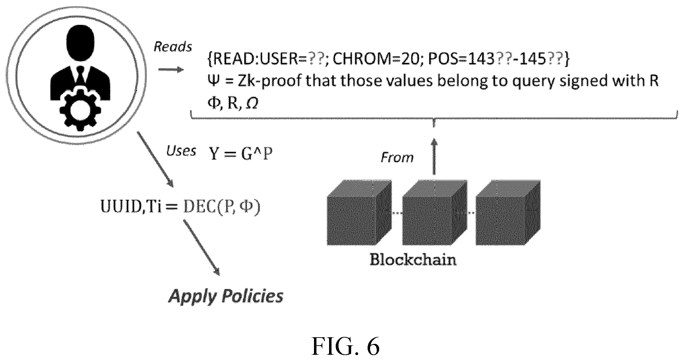

Referring to Fig. 6, in one embodiment, is a schematic for identification by the enforcer of the query entity or entities associated with the accessed one or more logged queries. The enforcer uses public key encryption techniques. The query entity or entities encrypted their identity together with a timestamp using the public key of the rule enforcer. The rule enforcer now decrypts that information so that only the enforcer can track whether the query entity or entities, whose identity remains hidden from all the databases in the system, is abiding by the desired goals and policies.

According to an embodiment, the system can implement the proposed zk-SNARKs using a library such as MIT's libsnark combined with a high-level logical circuit compiler such xjSNARK. The combination of xjSNARK and libsnark compiles the high level proof into a Quadratic Arithmetic Program. This Quadratic Span Program is input into a zk-SNARK generator together with a random secret element. The result of this are public proving and verification keys. The verification key is shared with regulators, auditors, or other interesting parties. The proving key can be shared freely, such as on a public forum.

According to an embodiment, implementation of the CLS method uses an elliptic curve pairing function e. Implementation of this method utilizes a type-3 elliptic curve pairing, such as a pairing over a 256-bit Barreto-Naehrig (BN) Curve. The pairing over the BN curve is formally denoted as follows:

$$e:G_1 \times G2 \to G_t$$

The generators are generators of G1, generated in a nothing-up-my-sleeves method (hashing the base generator of Gl, until a point is encountered). Under this Barreto-Naehrig curve the signatures will be 32 bytes large. The public encryption keys to be used by the rule enforcer proof can achieved by means of elliptic curve cryptography such as for example the secp256rl curve for implementing the asymmetric cryptography key pairs, using ECDSA to sign the document or consent forms. Alternatively, traditional RSA & DSA can be used with similar results.

Referring to Fig. 2 is a schematic representation of a distributed data system 200. System 200 may be any of the systems described or otherwise envisioned herein, and may comprise any of the components described or otherwise envisioned herein. It will be understood that Fig. 2 constitutes, in some respects, an abstraction and that the actual organization of the components of the system 200 may be different and more complex than illustrated.

According to an embodiment, system 200 comprises a processor 220 capable of executing instructions stored in memory 230 or storage 260 or otherwise processing data to, for example, perform one or more steps of the method. Processor 220 may be formed of one or multiple modules. Processor 220 may take any suitable form, including but not limited to a microprocessor, microcontroller, multiple microcontrollers, circuitry, field programmable gate array (FPGA), application-specific integrated circuit (ASIC), a single processor, or plural processors.

Memory 230 can take any suitable form, including a non-volatile memory and/or RAM. The memory 230 may include various memories such as, for example LI, L2, or L3 cache or system memory. As such, the memory 230 may include static random access memory (SRAM), dynamic RAM (DRAM), flash memory, read only memory (ROM), or other similar memory devices. The memory can store, among other things, an operating system. The RAM is used by the processor for the temporary storage of data. According to an embodiment, an operating system may contain code which, when executed by the processor, controls operation of one or more components of system 200. It will be apparent that, in embodiments where the processor implements one or more of the functions described herein in hardware, the software described as corresponding to such functionality in other embodiments may be omitted.

User interface 240 may include one or more devices for enabling communication with a user. The user interface can be any device or system that allows information to be conveyed and/or received, and may include a display, a mouse, and/or a keyboard for receiving user commands. In some embodiments, user interface 240 may include a command line interface or graphical user interface that may be presented to a remote terminal via communication interface 250. The user interface may be located with one or more other components of the system, or may located remote from the system and in communication via a wired and/or wireless communications network.

Communication interface 250 may include one or more devices for enabling communication with other hardware devices. For example, communication interface 250 may include a network interface card (NIC) configured to communicate according to the Ethernet protocol. Additionally, communication interface 250 may implement a TCP/IP stack for communication according to the TCP/IP protocols. Various alternative or additional hardware or configurations for communication interface 250 will be apparent.

Storage 260 may include one or more machine-readable storage media such as read-only memory (ROM), random-access memory (RAM), magnetic disk storage media, optical storage media, flash-memory devices, or similar storage media. In various embodiments, storage 260 may store instructions for execution by processor 220 or data upon which processor 220 may operate. For example, storage 260 may store an operating system 261 for controlling various operations of system 200.

It will be apparent that various information described as stored in storage 260 may be additionally or alternatively stored in memory 230. In this respect, memory 230 may also be considered to constitute a storage device and storage 260 may be considered a memory. Various other arrangements will be apparent. Further, memory 230 and storage 260 may both be considered to be non-transitory machine-readable media. As used herein, the term non-transitory will be understood to exclude transitory signals but to include all forms of storage, including both volatile and non-volatile memories.

While system 200 is shown as including one of each described component, the various components may be duplicated in various embodiments. For example, processor 220 may include multiple microprocessors that are configured to independently execute the methods described herein or are configured to perform steps or subroutines of the methods described herein such that the multiple processors cooperate to achieve the functionality described herein. Further, where one or more components of system 200 is implemented in a cloud computing system, the various hardware components may belong to separate physical systems. For example, processor 220 may include a first processor in a first server and a second processor in a second server. Many other variations and configurations are possible.

According to an embodiment, system 200 comprises a plurality of databases, a distributed database system 270, containing some or all of the data stored by the data system. The data system enables searching of the plurality of databases within the distributed database system 270. For a genomic data system, the distributed databases each comprise some genomic data.

According to an embodiment, storage 260 of system 200 may store one or more algorithms, modules, and/or instructions to carry out one or more functions or steps of the methods described or otherwise envisioned herein. For example, the system may comprise, among other instructions or data, logging instructions 262, reviewing instructions 263, verification instructions 264, modifying instructions 265, and/or a query logging database 266.

According to an embodiment, logging instructions 262 direct the system to log some or all of an encrypted query in a ledger such as query logging database 266 of the distributed data system. The encrypted query can be stored in query logging database 266 using any method for storing encrypted data. Logging query data enables the future retrieval of query data, such as identification of a querying entity, in the event of a potential or known security or privacy issue.

According to an embodiment, reviewing instructions 263 direct the system to review one or more one or more encrypted queries, such as one or more logged encrypted queries, for a potential security violation. This analysis or review can be performed without decrypting the query, and without knowing the identity of the querying entity that made each of the one or more encrypted queries. For example, an algorithm can review encrypted queries to identify a pattern or other flag or identifier that may indicate a potential privacy or security concern or violation. The pattern or other flag or identifier may indicate that a malicious authorized user or someone that has illicitly obtained an authorized user's credentials has accessed the distributed data system, potentially for unauthorized purposes. If a pattern or other flag or identifier is found, the user or distributed data system can alert an enforcer or other entity responsible for ensuring security and/or privacy of the distributed data system and/or the query logging database of the system.

According to an embodiment, verification instructions 264 direct the system to verify that the querying entity is an authorized user of the distributed data system, without revealing the identity of the querying entity. According to an embodiment, verifying comprises analysis of the encrypted digital signature using de-identification via the cryptographic authentication method and the digital signature method.

According to an embodiment, modifying instructions 265 direct the system to modify a received encrypted query to remove identifying information, thereby generating a modified encrypted query. The modification can be performed using any method for modifying an encrypted query.

All definitions, as defined and used herein, should be understood to control over dictionary definitions, definitions in documents incorporated by reference, and/or ordinary meanings of the defined terms.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of' or "exactly one of," or, when used in the claims, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of."

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified.

It should also be understood that, unless clearly indicated to the contrary, in any methods claimed herein that include more than one step or act, the order of the steps or acts of the method is not necessarily limited to the order in which the steps or acts of the method are recited.

In the claims, as well as in the specification above, all transitional phrases such as "comprising," "including," "carrying," "having," "containing," "involving," "holding," "composed of," and the like are to be understood to be open-ended, i.e., to mean including but not limited to. Only the transitional phrases "consisting of' and "consisting essentially of' shall be closed or semi-closed transitional phrases, respectively.

While several inventive embodiments have been described and illustrated herein, those of ordinary skill in the art will readily envision a variety of other means and/or structures for performing the function and/or obtaining the results and/or one or more of the advantages described herein, and each of such variations and/or modifications is deemed to be within the scope of the inventive embodiments described herein. More generally, those skilled in the art will readily appreciate that all parameters, dimensions, materials, and configurations described herein are meant to be exemplary and that the actual parameters, dimensions, materials, and/or configurations will depend upon the specific application or applications for which the inventive teachings is/are used. Those skilled in the art will recognize, or be able to ascertain using no more than routine experimentation, many equivalents to the specific inventive embodiments described herein. It is, therefore, to be understood that the foregoing embodiments are presented by way of example only and that, within the scope of the appended claims and equivalents thereto, inventive embodiments may be practiced otherwise than as specifically described and claimed. Inventive embodiments of the present disclosure are directed to each individual feature, system, article, material, kit, and/or method described herein. In addition, any combination of two or more such features, systems, articles, materials, kits, and/or methods, if such features, systems, articles, materials, kits, and/or methods are not mutually inconsistent, is included within the inventive scope of the present disclosure.

## Claims

1. A method (100) for logging queries made to a data system (200), comprising:

   receiving (120), at the data system, an encrypted query from an authorized query entity, wherein the encrypted query is digitally signed by the query entity using a digital signature method, and further wherein the digital signature is encrypted using a cryptographic authentication method; and
   logging (130), at a query logging database of the data system, at least a portion of the encrypted query.

2. The method of claim 1, wherein the digital signature method is the Camenisch-Lysyanskaya signature (CLS) digital signature method.

3. The method of claim 1, wherein the cryptographic authentication method is a zero-knowledge Succinct Non-interactive Arguments of Knowledge (zk-SNARK) method or a zero-knowledge Scalable Transparent ARguments of Knowledge (zk-STARK) method.

4. The method of claim 1, wherein the query further comprises: (i) a public key for the digital signature; and (ii) a public key for the cryptographic authentication.

5. The method of claim 4, wherein the query further comprises: (iii) an encrypted unique identifier for the authorized query entity; and (iv) an encrypted timestamp for the query.

6. The method of claim 1, further comprising the step of verifying (140), by the data system, that the query entity is an authorized query entity, wherein verifying comprises analysis of the encrypted digital signature using de-identification via the cryptographic authentication method and the digital signature method, wherein verification does not reveal the identity of the query entity.

7. The method of claim 1, further comprising the step of modifying (150), by the data system, the received encrypted query to remove identifying information, thereby generating a modified encrypted query, wherein at least a portion of the modified encrypted query is logged in the query logging database of the data system.

8. The method of claim 1, further comprising:
accessing (170), by an enforcer of the query system, one or more logged queries logged in the query logging database of the data system; and
identifying (180), by the enforcer, the one or more logged queries using the cryptographic authentication method and the digital signature method, and wherein verification reveals the identity of each of the one or more logged queries.

9. The method of claim 1, wherein the data system is a distributed genomic data system.

10. A distributed database system (200) for logging queries made to the system, comprising:

a query logging database (266) configured to store at least a portion of a query made by an authorized query entity to the distributed database system;
a plurality of distributed databases (270); and
a processor (220) configured to: (i) receive an encrypted query from the authorized query entity, wherein the encrypted query is digitally signed by the query entity using a digital signature method, and further wherein the digital signature is encrypted using a cryptographic authentication method; and (ii) cause the received encrypted query to be stored in the query logging database.

11. The distributed database system of claim 1, wherein the digital signature method is the Camenisch-Lysyanskaya signature (CLS) digital signature method.

12. The distributed database system of claim 1, wherein the cryptographic authentication method is a zero-knowledge Succinct Non-interactive Arguments of Knowledge (zk-SNARK) method or a zero-knowledge Scalable Transparent ARguments of Knowledge (zk-STARK) method.

13. The distributed database system of claim 1, wherein the query further comprises: (i) a public key for the digital signature; and (ii) a public key for the cryptographic authentication.

14. The distributed database system of claim 13, wherein the query further comprises: (iii) an encrypted unique identifier for the authorized query entity; and (iv) an encrypted timestamp for the query.

15. The distributed database system of claim 1, wherein the distributed database system is a distributed genomic data system.

100

Provide a distributed data system

110

Receive an encrypted query from an authorized query entity

120

Log at least some of the encrypted query in a query logging database of the system

130

Verify that the querying entity is an authorized query entity

140

Modify at least a portion of the encrypted query

150

Review one or more encrypted queries for a potential security concern

160

Access one or more logged queries by an enforcer

170

Identify the query entity or entities associated with the one or more accessed queries

180

FIG. 1

200

270

Distributed
Databases

220 Processor  230 Memory  240 User Interface

212 System Bus

261 Operating System

262 Logging
Instructions

263 Reviewing
Instructions

264 Verification
Instructions

265 Modifying
Instructions

266 Query Logging
Database

Communication
Interface

250

Storage

260

FIG. 2

300

FIG. 3

CLS Signature

$(\sigma, c, s) \rightarrow \{ \text{READ:USER=134; CHROM=20; POS=14370-14500} \}$

$R = g \wedge x , x \in Z$

$\Phi = ENC(Y,UUID,Ti)$

$\Lambda = Zk\text{-}SNARK\,Proof\,(\Phi ,Y)$

Researcher

$\Omega$ = Anon.
Valid Res.
Signature
Ex: ring sigs

*Owns &*
*Publishes*

$Y = G \wedge P$

*Send To while masking even IP-address*

*Checks* $\Omega$ *&* $\Lambda$

Beacon

## FIG. 4

Beacon

$\{\text{READ:USER=??; CHROM=20; POS=143??-145??}\}$

$\Psi$ = Zk-proof that those values belong to query signed with R

$\Phi, R, \Omega$

*Send To Blockchain*

Blockchain

*Checks* $\Omega = SIG(\Phi, R)$
*Checks* $\Psi$ (Optional!)

## FIG. 5

13

*Reads*

{READ:USER=??; CHROM=20; POS=143??-145??}

$\Psi$ = Zk-proof that those values belong to query signed with R

$\Phi, R, \Omega$

*Uses* $Y = G^{\wedge}P$

$UUID, Ti = DEC(P, \Phi)$

*From*

Blockchain

**Apply Policies**

FIG. 6

Europäisches
Patentamt

European
Patent Office

Office européen
des brevets

# EUROPEAN SEARCH REPORT

Application Number

EP 21 20 0624

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/054928 A1 (HALL ROBERT J [US]) 18 March 2004 (2004-03-18) * paragraph [0047] * * paragraph [0049] * ----- | 1-15 | INV. G06F21/55 G06F21/62 |
| A | US 2006/212491 A1 (AGRAWAL RAKESH [US] ET AL) 21 September 2006 (2006-09-21) * abstract * ----- | 1-15 | |
| A | US 2005/071337 A1 (BARANCZYK SHAWN JOSEPH [US] ET AL) 31 March 2005 (2005-03-31) * abstract * ----- | 1-15 | |

TECHNICAL FIELDS
SEARCHED       (IPC)

G06F

The present search report has been drawn up for all claims

| Place of search | Date of completion of the search | Examiner |
|---|---|---|
| Munich | 10 March 2022 | Mezödi, Stephan |

EPO FORM 1503 03.82 (P04C01)

## ANNEX TO THE EUROPEAN SEARCH REPORT
## ON EUROPEAN PATENT APPLICATION NO.

**EP 21 20 0624**

This annex lists the patent family members relating to the patent documents cited in the above-mentioned European search report.
The members are as contained in the European Patent Office EDP file on
The European Patent Office is in no way liable for these particulars which are merely given for the purpose of information.

**10-03-2022**

| Patent document cited in search report | | Publication date | Patent family member(s) | Publication date |
|---|---|---|---|---|
| US 2004054928 | A1 | 18-03-2004 | NONE | |
| US 2006212491 | A1 | 21-09-2006 | NONE | |
| US 2005071337 | A1 | 31-03-2005 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Signature schemes and anonymous credentials from bilinear maps. **CAMENISCH ; LYSYANSKAYA.** Advances in Cryptology Vol. Springer Verlag, 2004, vol. 3152, 56-72